# EUROPÄISCHE PATENTSCHRIFT

(11) **EP 4 065 403 B1**
(45) Veröffentlichungstag und Bekanntmachung des Hinweises auf die Patenterteilung: **28.08.2024**
(21) Anmeldenummer: 21801462.9
(22) Anmeldetag: 26.10.2021
(51) Int. Cl.: B60K 35/10, B60K 35/28, B60K 35/29

(54) **VERFAHREN ZUM BETREIBEN EINER BERÜHRUNGSSENSITIVEN EINGABEEINHEIT SOWIE BEDIENVORRICHTUNG UND KRAFTFAHRZEUG**
METHOD FOR OPERATING A TOUCH-SENSITIVE INPUT UNIT, AND INPUT UNIT AND MOTOR VEHICLE
PROCÉDÉ DE FONCTIONNEMENT D'UNE UNITÉ D'ENTRÉE TACTILE, UNITÉ D'ENTRÉE ET VÉHICULE À MOTEUR

(30) Priorität: 29.10.2020 DE 102020128419
(43) Veröffentlichungstag der Anmeldung: 05.10.2022
(73) Patentinhaber: Audi AG, 85045 Ingolstadt (DE)
(72) Erfinder: LERZER, Jürgen, 92318 Neumarkt (DE); KLEIN, Markus, 85104 Pförring (DE)
(74) Vertreter: Hofstetter, Schurack & Partner
(86) Internationale Anmeldenummer: PCT/EP2021/079593
(87) Internationale Veröffentlichungsnummer: WO 2022/090179

(56) Entgegenhaltungen:
- EP-A1- 2 650 164
- EP-A1- 2 869 181
- EP-B1- 2 936 309
- WO-A1-2019/004659
- DE-A1- 102012 223 641
- DE-A1- 102018 206 541

## Beschreibung

Die Erfindung betrifft ein Verfahren zum Betreiben einer berührungssensitiven Eingabeeinheit, über die Applikationen auf einem Rechner-System eines Kraftfahrzeugs mittels einer Berührungseingabe gesteuert werden. Die Erfindung betrifft auch eine Bedienvorrichtung, die gemäß dem Verfahren betrieben werden kann, sowie ein Kraftfahrzeug mit einer solchen Bedienvorrichtung.

In einem Kraftfahrzeug gibt es mehrere Möglichkeiten zur Steuerung des Cockpit- oder Infotainmentsystems. Eine dieser Bedienmöglichkeiten ist eine Berührungseingabe, die über einen Berührungsbildschirm (Touch-Display) oder über ein Touchpad eingegeben werden kann, um auf Applikationen des Infotainmentsystems zuzugreifen. Die Berührungseingabe kann mit einem Eingabeobjekt, beispielweise einem Finger und/oder einem Stift, durchgeführt werden.

Die Berührungseingabe kann von der Eingabeeinheit als eine Nachricht über eine Busverbindung an das Infotainmentsystem oder allgemein an ein Rechner-System übertragen werden, das die Applikationen ausführt. Die Busverbindung kann beispielweise mittels eines CAN-Bus-Systems realisiert sein.

Eine Applikation kann durch eine Software realisiert sein. Bei den Applikationen kann es sich beispielweise um eine Navigation und/oder Kommunikation und/oder Konnektivität und/oder einen Telematikdienst und/oder ein soziales Medium und/oder ein E-Mailprogramm und/oder eine Überprüfung der Verfügbarkeit von Parkplätzen und/oder Zahlungen und/oder das Streaming von Video und Audio handeln.

Die Berührungseingabe kann auf einem berührungssensitiven Display durch Koordinaten beschrieben werden, die hier als Berührkoordinaten bezeichnet sind. Mittels der Berührungseingabe kann z.B. ein Tastfeld (Icon oder Button oder Menüeintrag) oder ein Cursor bedient werden. Einige Berührungseingaben lassen dabei allerdings Rückschlüsse auf geheime oder zu schützende Daten zu. Bei einer solchen zu schützenden Berührungseingabe kann es sich z.B. um eine Passwort- und/oder PIN-Eingabe für einen Zugriff auf eine gesicherte Funktion, z.B. Zahlungen, handeln.

Dieselbe Eingabeeinheit kann auch durch andere, externe Applikationen verwendet werden, die nicht Bestandteil der herstellerseitigen Software sind, sondern z.B. nachträglich von einem Benutzer im Infotainmentsystem installiert wurden oder die sogar in einem anderen Steuergerät laufen, das ebenfalls an die Busverbindung angeschlossen sein kann. In einem solchen Fall kann die Berührungseingabe durch Angriffe der externen Applikationen anfällig für jegliche Manipulation sein, weshalb Applikationen auf dem herstellereigenen Rechner-System möglicherweise eine Sicherheitsfunktion oder einen Mechanismus zum Schutz der Berührungseingabe benötigen, wie eben z.B. der PIN-Eingabe. Würde man nun pauschal den gesamten Datenverkehr auf der Busverbindung verschlüsseln, wäre das Nachrüsten von externen Applikationen und Steuergeräten aber deutlich schwieriger, weil diese die Busdaten nicht entschlüsseln könnten und damit nicht mittels einer Berührungseingabe gesteuert werden könnten.

Aus der DE 10 2018 206 541 A1 ist eine berührungssensitive, flächige Eingabevorrichtung bekannt. Die Eingabevorrichtung ist über eine nachrichtenbasierte Busverbindung mit einer Steuereinrichtung verbunden und übermittelt Berührungsereignisse beschreibende Nachrichten an die Steuereinrichtung, welche diese zu einer Eingabeinformation für ein mittels der Steuereinrichtung umgesetztes Anwendungsprogramm auswertet.

Aus der US 2003 233 489 A1 ist ein Rechnersystem mit einer geschichteten Programmstruktur zum Einsatz in unsicheren Umgebungen bekannt. Das Rechnerprogramm weist mehrere voneinander getrennte Applikationsschichten auf, die separat verschlüsselbar sind, um bei Bedarf Daten verschlüsselt zu verarbeiten.

Die WO 2019/004659 A1 beschreibt ein Verfahren zur Steuerung einer Anzeige und ein zur Durchführung des Verfahrens eingerichtetes elektronisches Gerät. Das elektronische Gerät umfasst eine Kommunikationsschaltung, die dazu eingerichtet ist, mit mindestens einer externen Vorrichtung zum Kommunizieren, einen Speicher, der dazu eingerichtet ist, mehrere Anwendungsprogramme zu speichern, und eine Anzeige, die dazu eingerichtet ist, mehrere virtuelle Fenster auszugeben, wenn die mehreren Anwendungsprogramme ausgeführt werden.

Die DE10 2012 223 641 A1 offenbart ein Verfahren zum Umschalten von Anwendungsprogrammen in einem prozessorgesteuerten Multimedia-Endgerät, das mit einem prozessorgesteuerten Multimedia-Dockinggerät verbunden ist, wobei eine Gruppe mehrerer Anwendungsprogramme auf dem Multimedia-Endgerät gespeichert und zur Ausführung bereit gestellt wird, die Anwendungsprogramme auf dem Multimedia-Endgerät im Vordergrund oder im Hintergrund ablaufen können, wobei ein Anwendungsprogramm beim Ablaufen im Vordergrund Daten über eine grafische Benutzeroberfläche ausgeben kann.

Die EP 2 650 164 A1 beschreibt ein fahrzeuginternes Informationssystem, das ein Informationsterminal und eine fahrzeuginterne Vorrichtung umfasst. Die fahrzeuginterne Vorrichtung umfasst eine Anzeigeeinheit mit einem Anzeigebildschirm und schränkt einen Bildbereich ein, der sich über einen Teil oder den gesamten Anzeigebildschirm erstreckt. Das Informationsterminal enthält eine darin gespeicherte Anwendung, gibt ein der Anwendung entsprechendes Bild an das fahrzeuginterne Gerät aus und gibt Regelungsinformationen, die sich auf einen Bildbereich beziehen, der innerhalb des der Anwendung entsprechenden Bildes eingeschränkt werden soll, an das fahrzeuginterne Gerät aus.

Die EP 2 869 181 A1 beschreibt ein Verfahren zur Ausführung von Funktionen als Reaktion auf eine Berührungseingabe und eine elektronische Vorrichtung dam it.

Der Erfindung liegt die Aufgabe zugrunde, eine Berührungseingabe, welche auf einer berührungssensitiven Eingabeeinheit durch einen Benutzer eingegeben wird, bei der Übertragung zu einem Rechner-System vor einer Manipulation und/oder einem unzulässigen Mitlesen zu schützen, ohne hierbei die zusätzliche Nutzung der Eingabeeinheit durch andere, nicht-verschlüsselungsfähige Steuergeräte zu blockieren.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Durch die Erfindung ist ein Verfahren bereitgestellt, um eine berührungssensitive Eingabeeinheit einer Bedienvorrichtung eines Kraftfahrzeugs zu betreiben. Über die Eingabeeinheit werden Applikationen auf einem Rechner-System des Kraftfahrzeugs mittels einer jeweiligen Berührungseingabe eines Benutzers gesteuert. Die Eingabeeinheit kann ein Touchscreen (Berührungsbildschirm - Anzeige mit Berührungssensorik) sein oder ein Touchpad (ohne Anzeige), wobei in letztem Fall eine Anzeige durch ein separates Display (z.B. Bildschirm oder Head-up-Display) bereitgestellt sein kann. Die Eingabeeinheit kann mit dem Rechner-System über die besagte Busverbindung oder allgemein eine Kommunikationsverbindung zum Übertragen von Berührdaten, die die Berührungseingabe beschreiben, verbunden sein. Das Rechner-System kann z.B. das besagte Infotainmentsystem des Kraftfahrzeugs bereitstellen. Die jeweilige Applikation kann den Benutzer z.B. auffordern, Authentifizierungsdaten einzugeben, um Zugang zu der jeweiligen Applikation zu erhalten, woraufhin der Benutzer mit der Benutzereingabe antworten kann. Die Authentifizierungsdaten können beispielweise einen Benutzernamen und/oder ein Passwort und/oder eine PIN-Nummer darstellen. Dies sind Beispiele für zu schützende Berührungseingaben, die bei der Übertragung von der Eingabeeinheit zum Rechner-System zu schützen sind, weil noch ein anderes Steuergerät ebenfalls über die Kommunikationsverbindung mit der Eingabeeinheit verbunden sein und mitlesen könnte. Dagegen braucht z.B. eine Berührungseingabe zum Vergrößern eines Kartenausschnitts nicht geschützt werden.

Um festzulegen, welche der Applikation aktuell für den Benutzer im Vordergrund der Anzeige angezeigt wird, um die Berührungseingabe zu empfangen, verwaltet in dem Rechner-System eine Kompositionsschaltung eine jeweilige grafische Benutzeroberfläche (GUIs - graphical user interface) der Applikationen auf der berührungssensitiven Eingabeeinheit oder dem separaten Display. Die Kompositionsschaltung kann bespielweise ein Softwareprogramm und/oder eine Graphikkarte des Rechner-Systems umfassen. Die Benutzeroberflächen können ganz oder teilweise graphisch überlagert werden, was durch die Kompositionsschaltung in an sich bekannter Weise gesteuert werden kann, z.B. mittels eines sogenannten Window-Managers. Der "Vordergrund" der Anzeige kann schließlich der vom Benutzer sichtbare Anteil der Benutzeroberflächen sein. Ein Wechsel zwischen den Benutzeroberflächen kann durch Auswählen der zugehörigen Applikation (z.B. durch Antippen von deren Benutzeroberfläche oder mittels eines Bedienmenüs oder eines mechanischen Bedienelements) erfolgen. Die jeweilige Applikation, die durch einen Benutzer ausgewählt wird, kann durch die Kompositionsschaltung im Vordergrund geöffnet angezeigt werden. Sie kann dann entsprechend auch als Empfänger für die Berührungseingaben festgelegt werden. Für diese Zuordnung kommuniziert in dem Rechner-System eine Berührungssteuereinheit mit den Applikationen und/oder der Kompositionsschaltung. Die Berührungssteuereinheit kann mit der Kompositionsschaltung gekoppelt sein und sich von dieser informieren lassen, welche Applikation oder Applikationen durch die Kompositionsschaltung momentan im Vordergrund, also für den Benutzer sichtbar und für eine Berührungseingabe erreichbar, angezeigt wird.

Wird dann eine Berührungseingabe aus der berührungssensitiven Eingabeeinheit z.B. über die besagte Kommunikationsverbindung (z.B. die Busverbindung) an das Rechner-System übertragen, so kann die Berührungssteuereinheit diese Berührungseingabe an die ausgewählte Applikation weiterleiten.

Zusätzlich kann nun die Berührungssteuereinheit festlegen, dass die berührungssensitive Eingabeeinheit die Daten der Berührungseingabe (z.B. die Berührungskoordinaten) geschützt überträgt, wenn es sich um eine zu schützende Berührungseingabe handelt. Die Berührungssteuereinheit bewirkt hierzu in der berührungssensitiven Eingabeeinheit ein Umschalten zwischen einer aktivierten Absicherungssitzung und einer deaktivierten Absicherungssitzung für die Berührungseingaben. Die Absicherung der Berührungseingabe während der aktiven Absicherungssitzung kann in der Eingabeeinheit mittels eines Algorithmus für eine Verschlüsselung und/oder Signierung (z.B. Anhängen eines verschlüsselten Hash-Werts der Berührungseingabe) erfolgen. Eine Verschlüsselung schützt dabei vor einem Mitlesen und bevorzugt auch vor einer Manipulation; eine Signierung zumindest vor einer unerkennbaren Manipulation. Einer Absicherungssitzung kann dabei ein "Session Schlüssel" (Sitzungsschlüssel), also ein sitzungsspezifisch abgeleiteter Schlüssel, zugrunde liegen oder es kann ein für alle Absicherungssitzungen gültiger allgemeiner Schlüssel verwendet werden. Ein sitzungsspezifisch abgeleiteter Schlüssel ist ein Schlüssel, der nach einem vorgegebenen Schema für jeden Absicherungslauf neu generiert wird.

Zur Anforderung einer Aktivierung der Absicherungssitzung sendet eine jeweilige Applikation eine Aktivierungsnachricht als Anfrage an die Berührungssteuereinheit. Dann kann durch die Berührungssteuereinheit bei Bedarf eine Absicherung der Berührungseingabe für die jeweilige Applikation eingeschaltet (Applikation ist im Vordergrund) oder ausgeschaltet (Applikation nicht im Vordergrund) werden. Die Absicherung durch die Absicherungssitzung kann vorsehen, dass die Berührungsdaten der Berührungseingabe verschlüsselt und/oder mit einer Signatur ergänzt werden. Zusätzlich kann die Berührungssteuereinheit anhand eines zusätzlichen Kriteriums entscheiden, wann die Absicherungssitzung eingeschaltet oder ausgeschaltet werden soll, was später noch erläutert wird. Anhand der Aktivierungsnachricht kann die Berührungssteuereinheit also erkennen, ob eine Applikation aktuell vertrauliche Informationen vom Benutzer erhalten möchte und daher zu schützende Berührungseingaben empfängt. Die Berührungssteuereinheit kann als ein Softwareprogram bereitgestellt sein.

Durch die Berührungssteuereinheit wird entschieden, wann die Absicherungssitzung für die jeweilige Applikation aktiviert werden soll. Zu einer Absicherungssitzung für eine Applikation wird umgeschaltet, wenn die Berührungssteuereinheit die besagte Aktivierungsnachricht aus der jeweiligen Applikation empfangen hat und eine Nachricht der Kompositionsschaltung bestätigt, dass die grafische Benutzeroberfläche der jeweiligen Applikation im Vordergrund auf der Anzeige (also auf der berührungssensitiven Eingabeeinheit oder dem separaten Display) angezeigt wird. Mit anderen Worten kann die Berührungseingabe verschlüsselt und/oder signiert werden, wenn durch die Berührungssteuereinheit festgestellt wird, dass sich eine jeweilige Applikation im Vordergrund auf der berührungssensitiven Eingabeeinheit befindet, und die jeweilige Applikation zuvor oder während sie sich im Vordergrund befindet, zumindest temporär eine Verschlüsselung anfordert, weil es sich bei der zu erwartenden nächsten Berührungseingabe um zu schützende Angaben handelt.

Durch die Erfindung ergibt sich der Vorteil, dass eine Berührungseingabe auf einer berührungssensitiven Eingabeeinheit in Abhängigkeit von einer vorbestimmten Kriterium verschlüsselt und/oder signiert werden kann, und diese Absicherungssitzung aber durch die Berührungssteuereinheit wieder deaktiviert werden kann, wenn kein Bedarf an der Verschlüsselung besteht, sodass die berührungssensitive Eingabeeinheit auch anderen Applikationen zur Verfügung gestellt werden kann, die mit der Verschlüsselung und/oder Signatur nicht umgehen können. Für die Verschlüsselung kann in der Eingabeeinheit eine entsprechende Schaltung bereitgestellt sein, die durch die Berührungssteuereinheit z.B. über die Busverbindung aktiviert und deaktiviert werden kann. Die Entschlüsselung einer verschlüsselten Berührungseingabe und/oder die Verifikation einer Signatur kann in der Berührungssteuereinheit erfolgen, bevor diese die entschlüsselte und/oder verifizierte Berührungseingabe an die jeweilige Applikation weiterleitet.

Die Erfindung umfasst auch Ausführungsformen, durch die sich zusätzliche Vorteile ergeben.

In einer Ausführungsform stellt die berührungssensitive Eingabeeinheit ein Touchpad und/oder ein Touch-Display dar, auf dem die Berührungseingabe empfangen wird. Die berührungssensitiven Eingabeeinheit kann also ein separates Touchpad sein, welches mit einem Display oder Bildschirm gekoppelt sein kann. Die berührungssensitive Eingabeeinheit kann selbst ein Display mit einer integrierten Touch-Funktionalität oder Berührungseingabe-Funktionalität sein, also ein sogenannten Touchscreen (Berührungsbildschirm).

In einer Ausführungsform wird die Benutzeroberfläche der jeweiligen Applikation ganz allein in dem besagten graphischen Vordergrund angezeigt oder alternativ dazu nur teilweise, nämlich zusammen mit anderen Applikationen. Mit anderen Worten kann eine oder mehr als eine Applikation gleichzeitig auf der berührungssensitiven Eingabeeinheit angezeigt werden. Mehr als eine Applikation kann durch teilweises Überlagern der Benutzeroberflächen angezeigt werden. Ist durch eine dieser Applikationen, die Bestandteil des Vordergrunds sind, die Absicherungssitzung angefragt worden, so werden die Berührungseingaben für die gesamte Anzeigefläche, also für alle Koordinaten oder Berührorte, verschlüsselt und/oder signiert.

Falls eine Applikation eine Aktivierungsnachricht an die Berührungssteuereinheit sendet, wird gemäß einer Ausführungsform die Absicherungssitzung aktiviert und der jeweiligen Applikation ein Access-Token zur Authentifizierung aushändigt oder bereitstellt. Mit anderen Worten kann die jeweilige Applikation mit einer Identifikation versehen werden. Hierdurch ergibt sich der Vorteil, dass basierend auf einem vorbekannten Access-Token der Applikationen sichergestellt werden kann, dass nur diese Applikation und keine andere Applikation (z.B. eine Schadsoftware) die Absicherungssitzung wieder deaktivieren kann. Es kann zusätzlich vorgesehen sein, dass das Access-Token zumindest einer weiteren vorbestimmten Applikation bereitgestellt wird, damit diese ebenfalls zum Deaktivieren der Absicherungssitzung berechtigt wird. Zusätzlich oder alternativ zu einem Access-Token kann auf ein anderes Autorisierungsverfahren zurückgegriffen werden. Das Zurückschalten auf die deaktivierte Absicherungssitzung wird durch die jeweilige Applikation und/oder durch eine andere Applikation ausgelöst, falls diese eine Deaktivierungsnachricht als Anfrage zur Deaktivierung der Absicherungssitzung sendet und sich gemäß dem Autorisierungsverfahren autorisiert, insbesondere indem sie das Access-Token nachweist. Somit ist durch das Autorisierungsverfahren gesteuert, welche Applikation eine aktive Absicherungssitzung beenden kann.

In einer Ausführungsform überprüft die Berührungssteuereinheit während der aktiven Absicherungssitzung für eine Applikation einen Ausführungszustand der jeweiligen Applikation, insbesondere durch Überprüfen eines Vorliegens einer zyklischen Bestätigung der jeweiligen Applikation. Die aktive Absicherungssitzung wird ausgeschaltet, wenn der Ausführungszustand der jeweiligen Applikation ein vorbestimmtes Abschaltkriterium erfüllt. Das Abschaltkriterium kann umfassen, dass die zyklische Bestätigung ausbleibt. Die jeweilige Applikation muss also während der aktiven Absicherungssitzung die Aktivierungsnachricht oder eine Bestätigungsnachricht nach einem vorbestimmten Zeitintervall an die Berührungssteuereinheit wiederholt senden, um einen anhaltenden Bedarf an der Absicherungssitzung zu bestätigen. Falls die Bestätigung nach dem Zeitintervall fehlt oder an der Berührungssteuereinheit nicht empfangen wird, kann davon ausgegangen werden, dass die Applikation hängt und/oder nicht funktioniert und somit die Absicherungssitzung ausgeschaltet werden sollte. Hierdurch ergibt sich der Vorteil, dass die Berührungseingaben wieder für andere Applikationen lesbar werden, wenn die anfordernde Applikation hängt. Die Dauer des vorbestimmten Zeitintervall kann beispielweise in einem Bereich von zehn Millisekunden bis zu einer Minute oder mehr liegen. Dazu kann die jeweilige Applikation anhand von einer Deaktivierungsnachricht die Berührungssteuereinheit auffordern, die aktive Absicherungssitzung zu beenden. Die Deaktivierungsnachricht kann erzeugt werden, wenn die jeweilige Applikation keine Absicherung mehr benötigt (z.B. am Ende einer PIN-Eingabe) und/oder wenn sie geschlossen / beendet wird und/oder wenn keine geheime oder vertrauliche Berührungseingabe zu der jeweiligen Applikation weiter übertragen werden müssen. Das heißt, die jeweilige Applikation entscheidet selbst z.B. in Abhängig von einer aktuellen Benutzeraktion, ob die Absicherung weiter benötigt ist. Die Benutzeraktion kann beispielweise ein Einloggen in ein Email-Account sein. Hierdurch ergibt sich der Vorteil, dass durch die jeweilige Applikation der Berührungssteuereinheit mitgeteilt werden kann, ob ein Bedarf an die aktive Absicherungssitzung vorliegt und/oder die aktive Absicherungssitzung ausgeschaltet werden soll. Somit kann die Applikation die Zeit, in welcher die Absicherungssitzung aktiviert ist, minimieren.

In einer Ausführungsform ist vorgesehen, dass wenn eine vorbestimmte andere Applikation, zu welcher ein Absicherungsverbot vorliegt (z.B. Rückfahrkamera), und/oder eine der anderen Applikationen, zu welcher keine Anfrage für eine Absicherungssitzung vorliegt" im Vordergrund angezeigt wird, die aktive Absicherungssitzung durch die Berührungssteuereinheit ausgeschaltet wird. Mit anderen Worten lässt sich die aktive Absicherungssitzung ausschalten, wenn die Berührungssteuereinheit erkennt, dass auf der Anzeige durch eine Applikation ohne Verschlüsselungsbedarf oder mit Verschlüsselungsverbot belegt wird. Die vorbestimmte andere Applikation kann auch einen Vorrang gegenüber der jeweiligen Applikation aufweisen und deshalb bei ihrer Aktivierung ohne ein Zutun des Benutzers im Vordergrund angezeigt werden. Ein Bespiel für eine Applikation mit Absicherungsverbot ist ein Videostrom einer Rückfahrkamera. Es ergibt sich der Vorteil, dass eine Anzeigehierarchie der Applikationen im Vordergrund anhand von einer vorbestimmten Art und/oder Vorrängen und/oder Nachrängen der Applikationen gesteuert werden kann und die Deaktivierung einer Absicherungssitzung automatisch erfolgt, wenn eine hierarchisch höhere Applikation ohne Absicherungsbedarf aufgrund ihrer Hierarchiestufe automatisch in den Vordergrund gebracht wird. Dies ergibt insgesamt eine sogenannte Z-Ordnung, wobei Z die Überlagerungspositionen der Benutzeroberflächen angibt. Die vorbestimmte andere Applikation kann beispielweise die Rückfahrkamera und/oder ein Pop-up-Fenster für eine Notfallsituation und/oder eine Fehlermeldung darstellen. Für diese kann nun auch die selbsttätige Deaktivierung der Verschlüsselung erzwungen werden.

In einer Ausführungsform ist vorgesehen, dass wenn die aktive Absicherungssitzung ausgeschaltet ist, durch die Berührungssteuereinheit der jeweiligen Applikation und/oder einem Nutzer der jeweiligen Applikation signalisiert wird, dass die Absicherungssitzung deaktiviert ist. Zum Signalisieren wird eine Nachricht an die jeweilige Applikation gesendet und/oder eine Warnmeldung dem Nutzer auf der Anzeige angezeigt und/oder eine akustische Audio-Ausgabe ausgegeben.

In einer Ausführungsform werden die Applikationen in Funktionsgruppen eingeteilt. Beispielsweise können alle Applikationen, die auf einer gemeinsamen virtuellen Maschine laufen, einer Funktionsgruppe zugeordnet werden. Jede Funktionsgruppe beschreibt allgemein Applikationen, die zumindest von Art und/oder Funktion und/oder Ausführungssystem gleich sind. Eine jeweilige virtuelle Maschine kann ihr eigenes individuelles Betriebssystem aufweisen, auf dem die Applikationen ausgeführt werden können. Das Betriebssystem kann beispielweise ein Android-Betriebssystem ^{®} sein. Innerhalb der Funktionsgruppe können die Benutzeroberflächen der Applikationen durch eine gruppeneigene Kompositionseinheit zusammengefasst oder verwaltet werden, z.B. durch eine Kompositionssoftware des Betriebssystems, z.B. dem sogenannten Window-Manager. Aus einer Funktionsgruppe kommt somit bereits ein fertiger Anzeigeinhalt, der die Benutzeroberflächen aller Applikationen der Funktionsgruppe berücksichtigt. Die bisher beschriebene (globale) Kompositionsschaltung benötigt dann aus der Funktionsgruppe nur dieses Ergebnis dieser gruppeneigenen Komposition, um dieses wiederum mit den Benutzeroberflächen gruppenfremder Applikationen oder mit der Komposition aus einer anderen Funktionsgruppe zu überlagern, um den finalen Anzeige-Vordergrund zu ermitteln.

Um auch die Verschlüsselung für eine Funktionsgruppe zu verwalten, werden die Applikationen einer jeweiligen Funktionsgruppe, die jeweils die Aktivierungsnachricht an die Berührungssteuereinheit senden, einer gemeinsamen Anzeige-Schicht (Layer) zugeordnet. Die gemeinsame Schicht wird als eine einzelne Applikation in Bezug zur Aktivierung und/oder Deaktivierung der Absicherungssitzung betrachtet. Die gemeinsame Schicht kann beispielweise in einer Z-Ordnung der Anzeigehierarchie einen einzelnen Z-Wert aufweisen. Mit anderen Worten können die Applikationen, die zu einer jeweiligen gemeinsamen virtuellen Maschine zugeordnet sind, eine einzelne oder gemeinsame Absicherungssitzung teilen, falls sie die Aktivierungsnachricht an die Berührungssteuereinheit gesendet haben. Alternativ oder zusätzlich kann die Absicherungssitzung so lange aktiv bleiben, bis der Bedarf an der Absicherungssitzung für jede der Applikationen beendet oder gedeckt ist, die auf einer jeweiligen virtuellen Maschine ausgeführt werden und eine Absicherungssitzung angefordert hatten.

Die Funktionsgruppen können beispielweise als Software-Partitionen realisiert werden, die auf einer jeweiligen virtuellen Maschine betrieben werden kann. Eine Software-Partition kann beispielweise In-Vehicle-Infotainment (IVI) Applikationen und eine Software-Partition kann die System-Applikationen enthalten. Die IVI-Applikationen können sich beispielweise mit Navigation und/oder Radio und/oder Medien und/oder Telefon und/oder Internet-Surfen befassen. Die System-Applikationen können sich mit Klimatisierung und/oder Start-up-Animation und/oder System Pop-up-Meldungen zum Fahrzeugzustand befassen.

In einer Ausführungsform ist ein Zähler für die Berührungssteuereinheit vorgesehen, der eine momentane Anzahl der gültigen Aktivierungsnachrichten der zur jeweiligen Schicht gehörenden Applikationen zählt. Der Zähler beschreibt eine positive Zahl der Anzahl der Aktivierungsnachrichten, die noch gültig sind und/oder noch nicht durch eine Deaktivierungsnachricht widerrufen wurden. Die Absicherungssitzung wird aktiviert, solange die jeweilige Schicht im Vordergrund angezeigt wird und zusätzlich die momentane Anzahl der Aktivierungsnachrichten größer als 0 ist. Mit anderen Worten ändert sich die Anzahl der Aktivierungsnachrichten in dem Zähler, falls eine Aktivierungsnachricht und/oder eine Deaktivierungsnachricht an der Berührungssteuereinheit empfangen wird und/oder die beschriebene zyklisch Bestätigung ausbleibt. Der Zähler kann ein Programmcode oder eine Logikschaltung sein, die zumindest ein Takteingangssignal und zumindest ein Ausgangssignal aufweisen kann.

Der Zähler kann mit der Berührungssteuereinheit gekoppelt oder in diese integriert sein. Der Zähler kann in Abhängigkeit von einem Eingangssignal das Inkrement und/oder Dekrement durchführen.

In einer Ausführungsform wird die aktive Absicherungssitzung der jeweiligen Schicht ausgeschaltet und der Zähler auf 0 zurückgesetzt, falls eine Applikation einer anderen Funktionsgruppe durch die Kompositionsschaltung im Vordergrund angezeigt wird. Mit anderen Worten kann die Absicherungssitzung aktiviert bleiben, solange die jeweilige Schicht im Vordergrund angezeigt wird (und der Zählerwert größer als 0 ist). Allerdings kann die Absicherungssitzung für die jeweilige Schicht ausgeschaltet werden, wenn die jeweilige Schicht durch eine vorbestimmte Applikation im Vordergrund überlagert wird, die keine Absicherungssitzung benötigt. Die vorbestimmte andere Applikation kann auf einer anderen virtuellen Maschine ausgeführt sein oder z.B. durch ein externes Steuergerät, z.B. durch eine Rückfahrkamera, gegeben sein.

Eine Ausführungsform umfasst, dass in der Absicherungssitzung die Absicherung der Berührungseingabe in der Eingabeeinheit mittels eines Algorithmus für eine Verschlüsselung und/oder Signierung erfolgt, wie dies bereits beschrieben wurde.

Eine Ausführungsform umfasst, dass die Eingabeeinheit mehrere Displays umfasst und für den Fall, dass die Benutzeroberfläche einer Applikation mit einer aktiven Absicherungssitzung von einem ersten auf ein zweites der Displays bewegt wird, die Absicherungssitzung für das erste Display deaktiviert und für das zweite Display aktiviert wird. Somit folgt die Absicherungssitzung der Benutzeroberfläche.

Eine Ausführungsform umfasst, dass ein vorbestimmtes Steuergerät, welches von dem Rechner-System verschieden ist und welches ebenfalls mit der Eingabeeinheit gekoppelt ist, autorisiert wird, eine Absicherungssitzung zu beenden. Das Steuergerät ist insbesondere Bestandteil einer Rückfahrkamera, sodass für den Fall, dass ein Videostrom der Rückfahrkamera angezeigt wird (Rückwärtsgang eingelegt), keine Absicherungssitzung für den Videostrom aktiv ist.

Zu der Erfindung gehört auch eine Bedienvorrichtung für das Kraftfahrzeug. Die Bedienvorrichtung umfasst zumindest eine berührungssensitive Eingabeeinheit und ein Rechner-System mit einer Berührungssteuereinheit und einer Kompositionsschaltung. Die Eingabeeinheit kann mit dem Rechner-System über die beschriebene Busverbindung oder allgemein die beschriebene Kommunikationsverbindung gekoppelt sein. Die Berührungssteuereinheit weist einen Dateneingang zum Empfangen von Nachrichten aus der Kompositionsschaltung und/oder aus Applikationen und einen Datenausgang zum Steuern der berührungssensitiven Eingabeeinheit auf. Das Rechner-System kann eine Prozessoreinrichtung aufweisen, die dazu eingerichtet ist, Ausführungsformen des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Die berührungssensitive Eingabeeinheit ist dazu eingerichtet, Applikationen auf dem Rechner-System mittels einer Berührungseingabe zu steuern, die auf der berührungssensitiven Eingabeeinheit von einem Benutzer eingegeben wird, wobei in dem Rechner-System eine Kompositionsschaltung dazu eingerichtet ist, eine jeweilige grafische Benutzeroberfläche der Applikationen auf der berührungssensitiven Eingabeeinheit oder einem davon separaten Display anzuzeigen und die Berührungssteuereinheit dazu eingerichtet ist, mit den Applikationen und/oder der Kompositionsschaltung zu kommunizieren und ein Umschalten zwischen einer aktivierten Absicherungssitzung und einer deaktivierten Absicherungssitzung der Berührungseingabe in der berührungssensitiven Eingabeeinheit zu bewirken, wobei eine jeweilige Applikation dazu eingerichtet ist, zur Aktivierung der Absicherungssitzung als Aktivierungsnachricht eine Anfrage an die Berührungssteuereinheit zu senden.

Die Berührungssteuereinheit ist dazu eingerichtet, zu entscheiden, ob die Absicherungssitzung für die jeweilige Applikation aktiviert wird, wobei die Berührungssteuereinheit dazu eingerichtet ist, die Absicherungssitzung zu aktivieren, wenn eine Nachricht der Kompositionsschaltung bestätigt, dass die grafische Benutzeroberfläche der jeweiligen Applikation im Vordergrund auf der berührungssensitiven Eingabeeinheit oder dem separaten Display angezeigt ist, und die Berührungssteuereinheit die Aktivierungsnachricht aus der jeweiligen Applikation empfangen hat.

Das ebenfalls vorgesehene erfindungsgemäße Kraftfahrzeug ist bevorzugt als Kraftwagen, insbesondere als Personenkraftwagen oder Lastkraftwagen, oder als Personenbus oder Motorrad ausgestaltet.

Im Folgenden sind Ausführungsbeispiele der Erfindung beschrieben. Hierzu zeigt:
- Fig. 1: eine schematische Darstellung einer Ausführungsform des erfindungsgemäßen Verfahrens;
- Fig. 2: eine schematische Darstellung eines Ablaufplans grundsätzlicher Schritte des erfindungsgemäßen Verfahrens; und
- Fig. 3: eine Skizze zur Veranschaulichung einer Überlagerung von Benutzeroberflächen mehrerer Applikationen.

Bei den im Folgenden erläuterten Ausführungsbeispielen handelt es sich um bevorzugte Ausführungsformen der Erfindung.

In den Figuren bezeichnen gleiche Bezugszeichen jeweils funktionsgleiche Elemente.

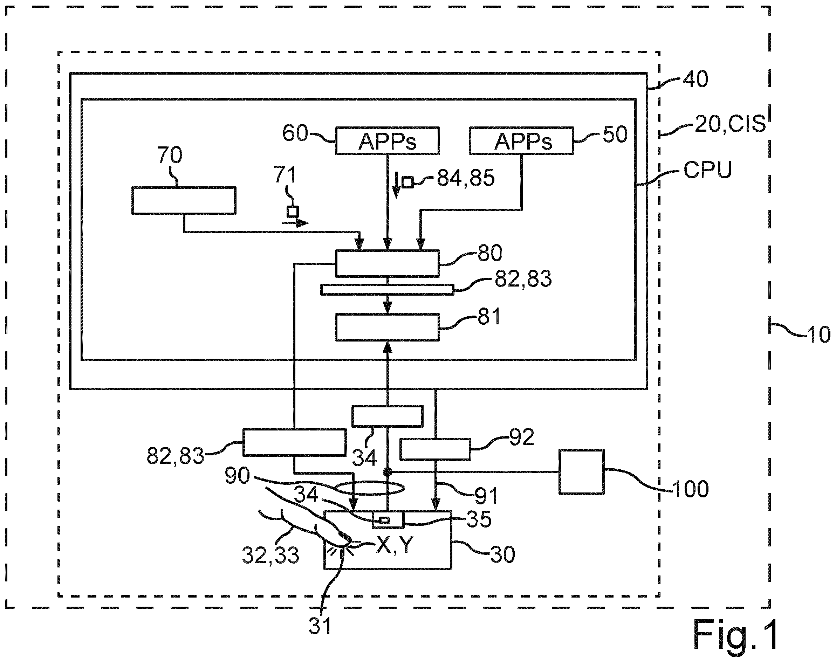

Fig. 1 zeigt ein Kraftfahrzeug 10, in dem eine Bedienvorrichtung 20 angeordnet ist. Das Kraftfahrzeug 10 kann beispielweise ein Kraftwagen, insbesondere ein Personenkraftwagen oder ein Personenbus oder ein Lastkraftwagen sein. Die Bedienvorrichtung 20 kann Bestandteil eines Cockpit-/Infotainmentsystems CIS (Informations-Unterhaltungssystem) sein. Sie umfasst eine berührungssensitive Eingabeeinheit 30, welche in Form von einem Touch-Screen ausgebildet sein kann. Alternativ kann die berührungssensitive Eingabeeinheit 30 ein Touchpad sein, der ein separater Monitor oder Head-up-Display (Kopfoben-Anzeige) zugeordnet sein kann. Die berührungssensitive Eingabeeinheit 30 kann in an sich bekannter Weise ein Sensorfeld zum Erfassen von Berühr- und/oder Streichgesten aufweisen. Es kann mehrere derartige berührungssensitive Eingabeeinheiten 30 in der Bedienvorrichtung 20 geben. Die berührungssensitive Eingabeeinheit 30 kann über eine Busverbindung 90 mit einem Rechner-System 40 verbunden sein. Über die Busverbindung 90 kann die berührungssensitive Eingabeeinheit 30 mit einer Berührungssteuereinheit 80 und/oder einer Kompositionsschaltung 70 des Rechner-Systems 40 kommunizieren. Die Busverbindung 90 kann einen CAN-Busverbindung 90 sein.

Über die Busverbindung 90 oder eine Displayverbindung 91 können Pixeldaten 92 für eine Anzeigesteuerung auf Eingabeeinheit 30 (oder dem separaten Display) ausgegeben werden. Alternativ dazu kann anstelle der separaten Busverbindung die Kommunikation in die Displayverbindung 91 integriert sein. Das Rechner-System 40 kann eine Prozessorschaltung CPU mit zumindest einem Mikroprozessor aufweisen. Die Kompositionsschaltung 70 und/oder die Berührungssteuereinheit 80 kann jeweils beispielweise auf einem Mikrocontroller und/oder einem Embedded-System und/oder einer anwendungsspezifischen integrierten Schaltung und/oder einer Software für die Prozessorschaltung CPU beruhen.

In dem Rechner-System 40 können Applikationen APPs betrieben werden, um Funktionalitäten der Bedienvorrichtung 20, insbesondere des Cockpit-/Infotainmentsystems CIS bereitzustellen. Die Applikationen können mittels einer Berührungseingabe 31 gesteuert werden, die auf der berührungssensitiven Eingabeeinheit 30 von einem Benutzer 32 z.B. mit einem Finger 33 und/oder einem Gegenstand eingegeben werden kann. Die Berührungseingabe 31 kann auf der berührungssensitiven Eingabeeinheit 30 durch die Berührungskoordinaten X, Y beschrieben werden.

Die Eingabeeinheit 30 kann Berührdaten 34 mit den Berührungskoordinaten X, Y über die Busverbindung 90 an die Berührungssteuereinheit 80 oder (wie in Fig. 1 dargestellt) an ein Empfangsmodul 81 senden, welches die Berührungskoordinaten X, Y an diejenige Applikation weiterleiten oder signalisieren kann, deren grafische Benutzeroberfläche aktuell auf der Eingabeeinheit 30 oder dem separaten Display an derjenigen Stelle angezeigt wird, die den Berührungskoordinaten X, Y entspricht.

Die Applikationen können in Funktionsgruppen 50, 60 eingeteilt sein. Hier sind beispielweise nur zwei Funktionsgruppe 50, 60 dargestellt. Jede Funktionsgruppe 50, 60 umfasst eine oder einige der Applikationen, die zumindest eine gemeinsame Funktion aufweisen können. Die gemeinsame Funktion kann beispielweise eine Unterhaltung für den Benutzer und/oder Steuerfunktion sein. Jede Funktionsgruppe 50, 60 kann auf einer virtuellen Maschine ausgeführt werden, damit die Applikationen der gleichen Funktionsgruppe 50, 60 durch eine einzelne virtuelle Maschine ausgeführt werden können. Eine solche virtuelle Maschine kann beispielsweise ein Android-Betriebssystem ^{®} ausführen, um die Applikationen einer Funktionsgruppe 50, 60 auszuführen.

Bei der Berührungseingabe des Benutzers kann es sich um ein Passwort und/oder PIN-Eingaben für einen Zugriff auf eine jeweilige Applikation für verschiedene Funktionen, z.B. Zahlungen und/oder E-Mail handeln.

Die Kompositionsschaltung 70 kann zuvor und/oder währenddessen die jeweilige grafische Benutzeroberfläche der Applikationen auf der berührungssensitiven Eingabeeinheit 30 oder dem separaten Display erzeugen. Das heißt, die Applikationen können durch die Kompositionsschaltung 70 geöffnet oder eingabebereit angezeigt werden. Um eine jeweilige Applikation einer jeweiligen Funktionsgruppe 50 zu steuern und/oder zuzugreifen, kann der Benutzer 32 aufgefordert werden, auf der berührungssensitiven Eingabeeinheit 30 die Berührungseingabe 31 einzugeben. Es kann vorgesehen sein, das eine bestimmte Funktion einer Applikation nur geöffnet angezeigt werden kann, wenn die Berührungseingabe mit einer vordefinierten Authentifizierung übereinstimmt. Die vordefinierte Authentifizierung kann beispielweise ein Passwort und/oder eine Nutzername und/oder Login-Angaben beschreiben. Die entsprechende Benutzereingabe 31 ist dann bei der Übertragung von der Eingabeeinheit 30 zu dem Empfangsmodul 81 zu schützen.

Denn es kann vorgesehen sein, dass ein Aftermarket-Gerät 100, das nicht Bestandteil einer herstellerseitigen Ausstattung ist, wie das Rechner-System 40 ebenfalls an die Busverbindung 90 angeschlossen ist, so dass es dort die Berührdaten 34 mit der Berührungseingabe 31 lesen und/oder sogar manipulieren könnte. Deshalb kann die Berührungseingabe 31 durch die Eingabeeinheit 30 verschlüsselt werden (in Fig. 1 symbolisiert durch eine Schraffur) und dann durch die Berührungssteuereinheit 80 oder das Empfangsmodul 81 entschlüsselt werden, bevor sie an eine der Applikationen weitergeleitet wird. Zusätzlich oder alternativ kann eine Signatur der Berührungseingabe 31 erfolgen. Zum Aktivieren der Verschlüsselung und/oder Signierung kann durch die Berührungssteuereinheit 80 in der Eingabeeinheit 30 eine Absicherungssitzung 34 mittels eines vorbestimmten Aktivierungssignals 82 aktiviert werden. Die Absicherungssitzung 34 kann durch ein kryptographisches Schaltungsmodul 35 der Eingabeeinheit 30 durchgeführt werden. Mittels eines Deaktivierungssignals 83 kann die Berührungssteuereinheit 80 in der Eingabeeinheit 30 die Absicherungssitzung 34 wieder deaktivieren. Falls ein Empfangsmodul 81 vorgesehen ist, kann darin eine Entschlüsselung und/oder Signaturverifikation entsprechend mittels eines Aktivierungssignals 82 aktiviert und mittels eines Deaktivierungssignals 83 deaktiviert werden. Im Folgenden ist beispielhaft angenommen, dass eine Verschlüsselung erfolgt.

Um zu entscheiden, in welchem Zeitfenster die Absicherungssitzung 34 aktiv sein soll, kann die Berührungssteuereinheit 80 in dem Rechner-System 40 mit den Applikationen und der Kompositionsschaltung 70 kommunizieren. Falls eine jeweilige Applikation aus einer der Funktionsgruppe 50, 60 eine Verschlüsselung für die Berührungseingabe benötigt (kann vom Hersteller der Applikation festgelegt sein), kann diese Applikation mittels einer Aktivierungsnachricht 84 eine Anfrage an die Berührungssteuereinheit 80 senden.

Zur Aktivierung der Absicherungssitzung 34 wird zusätzlich durch die Berührungssteuereinheit 80 geprüft, ob durch die Kompositionsschaltung 70 aktuell die Benutzeroberfläche der jeweiligen Applikation im Vordergrund auf der Anzeige angezeigt wird. Hierzu kann die Berührungssteuereinheit 80 entsprechende Daten oder Nachrichten 71 der Kompositionsschaltung 70 empfangen.

Für solche Zeitfenster, in denen im Vordergrund eine Applikation angezeigt wird, die eine Aktivierungsnachricht 84 zum Anfordern einer Absicherungssitzung gesendet hat, wird durch die Berührungssteuereinheit 80 in der Eingabeeinheit 30 die Absicherungssitzung aktiviert. Wird keine Applikation im Vordergrund angezeigt, die eine Anfrage für eine Absicherungssitzung 34 gesendet und/oder zyklisch bestätigt hat, so wird durch die Berührungssteuereinheit 80 die Absicherungssitzung deaktiviert.

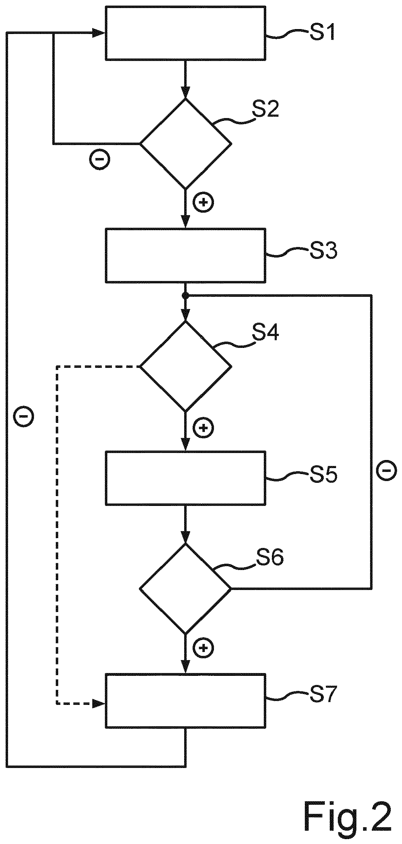

Fig. 2 zeigt einen möglichen Ablaufplan der Verfahrensschritte des entsprechenden Verfahrens, wobei die Reihenfolge einiger Verfahrensschritte auch verändert werden kann, ohne dass sich die Funktion des Verfahrens ändert.

In einem ersten Schritt S1 kann die Berührungssteuereinheit 80 aus der Kompositionsschaltung 70 die Nachrichten 71 empfangen, die signalisieren, welche Applikation oder welche Applikationen aktuell im Vordergrund auf der Anzeige der Eingabeeinheit 30 oder des separaten Displays angezeigt werden. In einem Schritt S2 kann die Berührungssteuereinheit 80 überprüfen, ob eine dieser aktuell im Vordergrund angezeigten Applikationen eine Aktivierungsnachricht 84 gesendet hat. Ist dies nicht der Fall (in Figur 2 durch ein Minus-Zeichen "-" symbolisiert), so kann zum Schritt S1 zurückgekehrt werden und neue, aktualisierte Nachrichten 71 ausgewertet werden, um eine Veränderung des Vordergrunds zu erkennen.

Wird dagegen im Schritt S2 erkannt, dass zumindest eine im Vordergrund angezeigte Applikation eine Aktivierungsnachricht 84 gesendet und/oder bestätigt hat (Plus-Zeichen "+"), so kann in einem Schritt S3 durch die Berührungssteuereinheit 80 der Eingabeeinheit 30 (und gegebenenfalls dem Empfangsmodul 81) mittels des Aktivierungssignals 82 die Absicherungssitzung 34 aktiviert werden. Nur bei aktivierter Absicherungssitzung 34 werden durch die Eingabeeinheit 30 die Berührdaten 34 der Berührungseingaben 31 verschlüsselt (und/oder signiert), bevor sie an das Rechner-System 40 ausgesendet werden.

In einem Schritt S4 kann überprüft werden, ob durch die Applikation die Aktivierungsnachricht 84 zyklisch bestätigt wird (indem sie beispielsweise zyklisch neu gesendet wird). Ist dies nicht der Fall (minus-Zeichen "-"), so kann zu einem Schritt S7 gesprungen werden. Dies ist ein Beispiel für ein Autorisierungsverfahren.

Ist die Bestätigung dagegen der Fall (plus-Zeichen "+"), so kann in einem Schritt S5 die Absicherungssitzung 34 aufrecht erhalten werden, also während eine Anzeige der grafischen Benutzeroberfläche der Applikation erfolgt weiterhin von jeder erfassten Benutzereingabe 31 deren Berührungsdaten 34 verschlüsselt z.B. über die Busverbindung 90 übertragen werden.

Hierbei kann in einem Schritt S6 überprüft werden, ob zwischenzeitlich eine dominante oder in einer Z-Ordnung übergeordnete Applikation, die keine Verschlüsselung benötigt oder für die keine Verschlüsselung vorgesehen sein darf, im Vordergrund überlagert wird (erkennbar durch aktualisierte Nachrichten 71). Ist dies der Fall (Plus-Symbol "+"), so kann zum Schritt S7 gewechselt werden. Andernfalls (Minus-Symbol "-") kann mit dem Schritt S4 fortgefahren werden.

In dem Schritt S7 wird die die Aktivierungsnachricht 83 zum Deaktivieren der Absicherungssitzung 34 durch die Berührungssteuereinheit 80 ausgesendet.

Sodann kann mit dem Schritt S1 fortgefahren werden, um eine Veränderung der Anzeige im Vordergrund zu erfassen erkennen.

In der folgenden Tabelle ist eine Zustandsteuerung für die Absicherungssitzung 34 dargestellt:

| Aktivierungsnachricht von Applikation erhalten | GUI der Applikation auf Anzeige überlagert | Absicherungssitzung |
|---|---|---|
| ja | nein | an |
| ja | ja | aus |
| nein | nein | aus |
| nein | ja | aus |

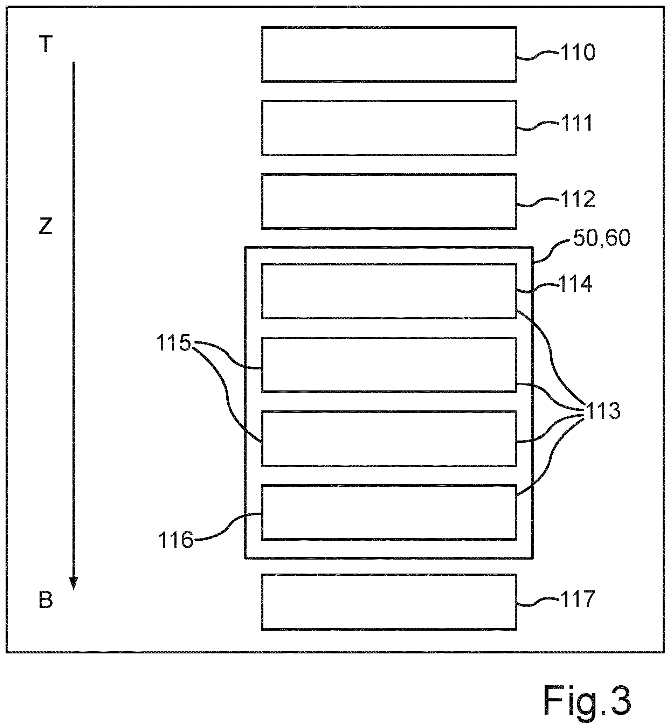

In Fig. 3 ist dargestellt, wie die beschriebene Hierarchie oder Z-Ordnung realisiert werden kann. Die Z-Ordnung kann von einer höchsten Hierarchiestufe T (top) bis zu einer niedrigsten Hierarchiestufe B (bottom) reichen. Bei einer Anzeige, bei welcher die Benutzeroberfläche nur einer einzelnen Applikation zur Zeit dargestellt wird, ergibt sich durch die Z-Ordnung, welche Applikation die Benutzeroberfläche welcher anderen Applikation im Vordergrund überlagert, wenn sie aktiv ist. Die Hierarchiestufe T ist dabei die dominanteste. Können mehrere Benutzeroberflächen durch nur teilweises überlagern auch gleichzeitig angezeigt werden, so kann die Überlagerung für unterschiedliche Bildregionen individuell gemäß der Z-Ordnung entschieden oder festgelegt werden. Die Z-Ordnung kann programmtechnisch im Voraus festgelegt sein.

Dargestellt ist, wie hochpriore Pop-Up-Fenster 110 für System-Meldungen (z.B. eine Warnmeldung) die höchste Hierarchiestufe T einnehmen können, dann beispielsweise die Benutzeroberfläche 111 einer Einparkhilfe des Kraftfahrzeugs 10, beispielsweise einer Rückfahrkamera. Darunter kann in der Z-Ordnung eine Applikation 112 angeordnet sein. Des Weiteren ist dargestellt, wie mehrere Applikationen 113 einer Funktionsgruppe 50, 60 gemeinsam eine einzige Hierarchiestufe in der Z-Ordnung einnehmen können. Innerhalb dieser jeweiligen Funktionsgruppe 50, 60 kann beispielsweise eine gruppeneigene Kompositionseinheit mit einer gruppeninternen Hierarchie für Pop-Ups 114, gruppeneigene Applikationen 115 und einen grafischen Hintergrund 116 der Funktionsgruppe vorgesehen sein. Die niedrigste Hierarchiestufe B kann durch einen globalen oder allgemeinen grafischen Hintergrund 117 oder ein globales Bedienmenü eingenommen sein.

Falls mehrere Eingabeeinheiten 30 mit eigener Anzeige vorgesehen sind, beispielsweise mehrere Touchscreens, so kann für jede davon eine individuelle Absicherungssitzung 34 unabhängig von jeder anderen Eingabeeinheit 30 geschaltet werden. Durch die Nachrichten 71 der Kompositionsschaltung kann signalisiert werden, auf welcher Anzeige aktuell welche der Applikationen mit ihrer jeweiligen Benutzeroberfläche angezeigt wird. Zusätzlich oder alternativ dazu kann durch jede Applikation selbst durch die Aktivierungsnachrichten 84 und durch Deaktivierungsnachrichten signalisiert werden, für welche der Eingabeeinheiten 30 die Applikation aktuell die Absicherungssitzung 34 benötigt. So kann eine Applikation immer dann, wenn ihre Benutzeroberfläche, z.B. ihr sogenanntes Fenster (Window), zwischen auf eine andere Anzeige verschoben wird, die Absicherungssitzung 34 entsprechend umstellen oder "mitnehmen".

Insgesamt zeigen die Beispiele, wie eine adaptive dynamische Verschlüsselung einer Berührungseingabe bereitgestellt werden kann.

## Patentansprüche

1. Verfahren zum Betreiben zumindest einer berührungssensitiven Eingabeeinheit (30) einer Bedienvorrichtung (20) für ein Kraftfahrzeug (10), wobei über die berührungssensitive Eingabeeinheit (30) Applikationen auf einem Rechner-System (60) des Kraftfahrzeugs (10) mittels einer Berührungseingabe (31) gesteuert werden, die auf der berührungssensitiven Eingabeeinheit (30) von einem Benutzer (32) eingegeben wird, wobei in dem Rechner-System (40) eine Kompositionsschaltung (70) eine jeweilige grafische Benutzeroberfläche der Applikationen auf der berührungssensitiven Eingabeeinheit (30) oder einem davon separaten Display anzeigt und eine Berührungssteuereinheit (80) mit den Applikationen und/oder der Kompositionsschaltung (70) kommuniziert und ein Umschalten zwischen einer aktivierten Absicherungssitzung (34) und einer deaktivierten Absicherungssitzung (34) der Berührungseingabe (31) in der berührungssensitiven Eingabeeinheit (30) bewirkt, wobei zur Aktivierung der Absicherungssitzung (34) eine jeweilige Applikation als Aktivierungsnachricht (81) eine Anfrage an die Berührungssteuereinheit (80) sendet,
**dadurch gekennzeichnet, dass**
durch die Berührungssteuereinheit (80) entschieden wird, ob die Absicherungssitzung (34) für die jeweilige Applikation aktiviert wird, wobei die Absicherungssitzung (34) aktiviert wird, wenn eine Nachricht der Kompositionsschaltung (70) bestätigt, dass die grafische Benutzeroberfläche der jeweiligen Applikation im Vordergrund auf der berührungssensitiven Eingabeeinheit (30) oder dem separaten Display angezeigt wird, und die Berührungssteuereinheit (80) die Aktivierungsnachricht (81) aus der jeweiligen Applikation empfangen hat.

2. Verfahren nach einem der vorhergehenden Ansprüche, wobei die jeweilige Applikation ganz oder teilweise in dem Vordergrund auf der berührungssensitiven Eingabeeinheit (30) angezeigt wird.

3. Verfahren nach einem der vorhergehenden Ansprüche, wobei falls die jeweilige Applikation die Aktivierungsnachricht (81) an die Berührungssteuereinheit (80) sendet, die Absicherungssitzung (34) aktiviert wird und der jeweiligen Applikation (50) ein vorbestimmtes Autorisierungsverfahren, insbesondere ein Access-Token zur Authentifizierung zugeordnet wird und das Zurückschalten auf die deaktivierte Absicherungssitzung durch die jeweilige Applikation und/oder durch eine andere Applikation ausgelöst wird, falls diese eine Deaktivierungsnachricht als Anfrage zur Deaktivierung der Absicherungssitzung (34) sendet und sich gemäß dem Autorisierungsverfahren autorisiert, insbesondere indem sie das Access-Token nachweist.

4. Verfahren nach einem der vorhergehenden Ansprüche, wobei während der für eine Applikation aktiven Absicherungssitzung (34) die Berührungssteuereinheit (80) einen Ausführungszustand der jeweiligen Applikation überprüft, insbesondere durch Überprüfen eines Vorliegens einer zyklischen Bestätigung der jeweiligen Applikation, und die aktive Absicherungssitzung (34) ausgeschaltet wird, wenn der Ausführungszustand der jeweiligen Applikation ein vorbestimmtes Abschaltkriterium erfüllt, insbesondere wenn die zyklische Bestätigung ausbleibt.

5. Verfahren nach einem der vorhergehenden Ansprüche, wobei wenn eine vorbestimmte andere Applikation, zu welcher ein Absicherungsverbot vorliegt, und/oder eine der anderen Applikationen, zu welcher keine Anfrage für eine Absicherungssitzung (34) vorliegt, durch die Kompositionsschaltung (70) auf der berührungssensitiven Eingabeeinheit (30) im Vordergrund angezeigt wird, die aktive Absicherungssitzung (34) der Berührungseingabe (31) für die jeweilige Applikation durch die Berührungssteuereinheit (80) ausgeschaltet wird.

6. Verfahren nach einem der vorhergehenden Ansprüche, wobei wenn die aktive Absicherungssitzung ausgeschaltet ist, durch die Berührungssteuereinheit (80) der jeweiligen Applikation und/oder einem Nutzer der jeweiligen Applikation signalisiert wird, dass die Absicherungssitzung (34) deaktiviert ist, und wobei zum Signalisieren eine Nachricht (71) an die jeweilige Applikation gesendet und/oder eine Warnmeldung dem Nutzer auf der berührungssensitiven Eingabeeinheit (30) oder dem Display und/oder eine akustische Audio-Ausgabe ausgegeben wird.

7. Verfahren nach einem der vorhergehenden Ansprüche, wobei die Applikationen in Funktionsgruppen (50, 60), insbesondere virtuelle Maschine, eingeteilt werden, und für eine jeweilige Funktionsgruppe (50) den Applikationen, die jeweils die Aktivierungsnachricht (81) an die Berührungssteuereinheit (80) senden, eine gemeinsame Schicht zugeordnet wird, und wobei die gemeinsame Schicht als eine einzelne Applikation in Bezug zur Aktivierung und/oder Deaktivierung der Absicherungssitzung (34) betrachtet wird.

8. Verfahren nach Anspruch 7, wobei zum Zählen einer momentanen Anzahl der Aktivierungsnachrichten (83) der zur jeweiligen Schicht gehörenden Applikationen ein Zähler in der Berührungssteuereinheit (80) vorgesehen ist, und wobei der Zähler eine positive Zahl beschreibt und/oder ein Inkrement oder Dekrement der Anzahl der Aktivierungsnachrichten (83) beschreibt, und wobei die Absicherungssitzung (34) aktiviert wird, solange die jeweilige Schicht im Vordergrund angezeigt wird und die momentane Anzahl der Aktivierungsnachrichten (83) größer als 0 ist.

9. Verfahren nach Ansprüche 7 und 8, wobei falls durch die Kompositionsschaltung (70) eine Applikation einer anderen Funktionsgruppe (60) auf der berührungssensitiven Eingabeeinheit (30) angezeigt wird, die aktive Absicherungssitzung (34) der jeweiligen Schicht ausgeschaltet und der Zähler auf 0 zurückgesetzt wird.

10. Verfahren nach einem der vorhergehenden Ansprüche, wobei in der Absicherungssitzung (34) die Absicherung der Berührungseingabe (31) in der Eingabeeinheit (30) mittels eines Algorithmus für eine Verschlüsselung und/oder Signierung erfolgt.

11. Verfahren nach einem der vorhergehenden Ansprüche, wobei die Eingabeeinheit (30) mehrere Displays umfasst und für den Fall, dass eine Applikation mit einer aktiven Absicherungssitzung (34) von einem ersten auf ein zweites der Displays bewegt wird, die Absicherungssitzung für das erste Display deaktiviert und für das zweite Display aktiviert wird.

12. Verfahren nach einem der vorhergehenden Ansprüche, wobei ein vorbestimmtes Steuergerät, welches mit der Eingabeeinheit (30) gekoppelt ist, autorisiert wird, eine Absicherungssitzung (34) zu beenden.

13. Bedienvorrichtung (20) mit zumindest einer berührungssensitiven Eingabeeinheit (30), einer Berührungssteuereinheit (80), einem Rechner-System (40) und einer Kompositionsschaltung (70), wobei die Berührungssteuereinheit (80) einen Dateneingang zum Empfangen von Nachrichten und einen Datenausgang zum Steuern einer berührungssensitiven Eingabeeinheit (30) aufweist, wobei die berührungssensitive Eingabeeinheit (30) dazu eingerichtet ist, Applikationen auf dem Rechner-System (60) mittels einer Berührungseingabe (31) zu steuern, die auf der berührungssensitiven Eingabeeinheit (30) von einem Benutzer (32) eingegeben wird, wobei in dem Rechner-System (40) eine Kompositionsschaltung (70) dazu eingerichtet ist, eine jeweilige grafische Benutzeroberfläche der Applikationen auf der berührungssensitiven Eingabeeinheit (30) oder einem davon separaten Display anzuzeigen und die Berührungssteuereinheit (80) dazu eingerichtet ist, mit den Applikationen und/oder der Kompositionsschaltung (70) zu kommunizieren und ein Umschalten zwischen einer aktivierten Absicherungssitzung (34) und einer deaktivierten Absicherungssitzung (34) der Berührungseingabe (31) in der berührungssensitiven Eingabeeinheit (30) zu bewirken, wobei eine jeweilige Applikation dazu eingerichtet ist, zur Aktivierung der Absicherungssitzung (34) als Aktivierungsnachricht (81) eine Anfrage an die Berührungssteuereinheit (80) zu senden,
**dadurch gekennzeichnet, dass**
die Berührungssteuereinheit (80) dazu eingerichtet ist, zu entscheiden, ob die Absicherungssitzung (34) für die jeweilige Applikation aktiviert wird, wobei die Berührungssteuereinheit (80) dazu eingerichtet ist, die Absicherungssitzung (34) zu aktivieren, wenn eine Nachricht der Kompositionsschaltung (70) bestätigt, dass die grafische Benutzeroberfläche der jeweiligen Applikation im Vordergrund auf der berührungssensitiven Eingabeeinheit (30) oder dem separaten Display an-gezeigt ist, und die Berührungssteuereinheit (80) die Aktivierungs-nachricht (81) aus der jeweiligen Applikation empfangen hat, wobei eine Prozessoreinrichtung dazu eingerichtet ist, ein Verfahren nach einem der vorhergehenden Ansprüche durchzuführen.

14. Kraftfahrzeug (10) mit einer Bedienvorrichtung (20) für ein Verfahren nach einem der Ansprüche 1 bis 12, wobei die Bedienvorrichtung (20) umfasst:
zumindest eine berührungssensitive Eingabeeinheit (30), die zum Eingeben von einer Berührungseingabe (31) und/oder zum Anzeigen der Berührungseingabe (31) eingerichtet ist,
eine Berührungssteuereinheit (80), die zum Empfangen von Nachrichten und/oder zum Steuern der zumindest einen berührungssensitiven Eingabeeinheit (30) eingerichtet ist,
ein Rechner-System (40),
eine Kompositionsschaltung (70), die zum Erzeugen einer grafischen Benutzeroberfläche von Applikationen auf der berührungssensitiven Eingabeeinheit (30) oder einem separaten Display eingerichtet ist, wobei
die Berührungssteuereinheit (80) dazu eingerichtet ist, mit den Applikationen und/oder der Kompositionsschaltung (70) zu kommunizieren und ein Umschalten zwischen einer aktivierten Absicherungssitzung (34) und einer deaktivierten Absicherungssitzung (34) der Berührungseingabe (31) in der berührungssensitiven Eingabeeinheit (30) zu bewirken, wobei eine jeweilige Applikation dazu eingerichtet ist, zur Aktivierung der Absicherungssitzung (34) als Aktivierungsnachricht (81) eine Anfrage an die Berührungssteuereinheit (80) zu senden,
**dadurch gekennzeichnet, dass**
die Berührungssteuereinheit (80) dazu eingerichtet ist, zu entscheiden, ob die Absicherungssitzung (34) für die jeweilige Applikation aktiviert wird, wobei die Berührungssteuereinheit (80) dazu eingerichtet ist, die Absicherungssitzung (34) zu aktivieren, wenn eine Nachricht der Kompositionsschaltung (70) bestätigt, dass die grafische Benutzeroberfläche der jeweiligen Applikation im Vordergrund auf der berührungssensitiven Eingabeeinheit (30) oder dem separaten Display an-gezeigt ist, und die Berührungssteuereinheit (80) die Aktivierungs-nachricht (81) aus der jeweiligen Applikation empfangen hat, wobei eine Prozessoreinrichtung dazu eingerichtet ist, ein Verfahren nach einem der vorhergehenden Ansprüche durchzuführen.

## Claims

1. A method for operating at least one touch-sensitive input unit (30) of an operating device (20) for a motor vehicle (10), wherein, via the touch-sensitive input unit (30), applications on a computer system (60) of the motor vehicle (10) are controlled by means of a touch input (31) entered by a user (32) on the touch-sensitive input unit (30), wherein a composition circuit (70) in the computer system (40) displays a respective graphical user interface for the applications on the touch-sensitive input unit (30) or a display separate therefrom, and a touch control unit (80) communicates with the applications and/or the composition circuit (70) and effects switching between an activated protection session and a deactivated protection session for the touch input (31) into the touch-sensitive input unit (30), wherein a respective application sends a query to the touch control unit (80) as an activation message (81) in order to activate the protection session,
**characterized in that**
the touch control unit (80) decides whether the protection session (34) for the respective application will be activated, wherein the protection session (34) is activated if a message from the composition circuit (70) confirms that the graphical user interface for the respective application is being displayed in the foreground on the touch-sensitive input unit (30) or the separate display and that the touch control unit (80) has received the activation message (81) from the respective application.

2. The method according to one of the preceding claims, wherein the respective application is completely or partially displayed in the foreground on the touch-sensitive input unit (30).

3. The method according to one of the preceding claims, wherein, if the respective application sends the activation message (81) to the touch control unit (80), the protection session (34) is activated, and the respective application (50) is associated with a predetermined authorization method for authentication, in particular an access token, and the reset to the deactivated protection session is triggered by the respective application and/or another application if said application sends a deactivation message as a query in order to deactivate the protection session (34) and authorizes itself according to the authorization method, in particular by confirming the access token.

4. The method according to one of the preceding claims, wherein, during the active protection session (34) for an application, the touch control unit (80) verifies an execution state of the respective application, in particular by verifying the presence of a cyclic confirmation of the respective application, and the active protection session (34) is switched off if the execution state of the respective application satisfies a predetermined criterium, in particular if the cyclic confirmation is absent.

5. The method according to one of the preceding claims, wherein, if a predetermined other application for which a security prohibition is present and/or another application for which no query for a protection session is present is/are displayed by the composition circuit (70) in the foreground on the touch-sensitive input unit (30), the active protection session (34) for the touch input (31) for the respective application is switched off by the touch control unit (80).

6. The method according to one of the preceding claims, wherein, if the active protection session is switched off, the touch control unit (80) notifies the respective application and/or a user of the respective application that the protection session (34) is deactivated, and wherein, for said notification, a message (71) is sent to the respective application, and/or a warning message is sent to the user on the touch-sensitive input unit (30) or the display, and/or an acoustic audio output is emitted.

7. The method according to one of the preceding claims, wherein the applications are divided into functional groups (50, 60), in particular virtual machines, and a respective functional group (50) of applications, which each send an activation message (81) to the touch control unit (80), is associated with a common layer, and wherein the common layer is regarded as a single application with respect to activation and/or deactivation of the protection session (34).

8. The method according to claim 7, wherein, a counter is provided in the touch control unit (80) in order to count a present number of activation messages (83) from the applications belonging to the respective layer, and wherein the counter describes a positive number and/or an increment or decrement in the number of activation messages (83), and wherein the protection session (34) is activated as long as the respective layer is displayed in the foreground and the present number of activation messages (83) is greater than 0.

9. The method according to claims 7 and 8, wherein, if an application from a different functional group (60) is displayed on the touch-sensitive input unit (30) by the composition circuit (70), the active protection session (34) for the respective layer is switched off and the counter reset to 0.

10. The method according to one of the preceding claims, wherein the protection of the touch input (31) into the input unit (30) during the protection session is performed by means of an algorithm for encryption and/or signature.

11. The method according to one of the preceding claims, wherein the input unit (30) comprises multiple displays, and, if an application with an active protection session (30) is moved from a first display to a second display, then the protection session for the first display is activated, and the protection session for the second display is activated.

12. The method according to one of the preceding claims, wherein a predetermined control apparatus, which is coupled with the input unit (30), is authorized to end a protection session (34).

13. An operating device (20) comprising at least one touch-sensitive input unit (30), one touch control unit (80), one computer system (40), and one composition circuit (70), wherein the touch control unit (80) comprises a data input for receiving messages and a data output for controlling a touch-sensitive input unit (30), wherein the touch-sensitive input unit (30) is configured to control applications on the computer system (60) by means of a touch input (31) which is entered by a user on the touch-sensitive input unit (30), wherein a composition circuit (70) in the computer system (40) is configured to display a respective graphical user interface for the applications on the touch-sensitive input unit (30) or a display separate therefrom, and the touch control unit (80) is configured to communicate with the applications and/or the composition circuit (70) and to effect switching between an activated protection session (34) for the touch input (31) into the touch-sensitive input unit (30), wherein a respective application is configured to send a query to the touch control unit (80) as an activation message (81) in order to activate the protection session (34),
**characterized in that**
the touch control unit (80) is configured to decide whether the protection session (34) for the respective application will be activated, wherein the touch control unit (80) is configured to activate the protection session (34) if a message from the composition circuit (70) confirms that the graphical user interface for the respective application is being displayed in the foreground on the touch-sensitive input unit (30) or the separate display and that the touch control unit (80) has received the activation message (81) from the respective application, wherein the processor arrangement is configured to perform a method according to one of the preceding claims.

14. A motor vehicle (10) comprising an operating device (20) for a method according to one of claims 1 to 12, wherein the operating device (20) comprises:
at least one touch-sensitive input unit (30), which is configured for entering a touch input (31) and/or for displaying the touch input (31),
a touch control unit (80), which is configured for receiving messages and/or controlling the at least one touch-sensitive input unit (30),
a computer system (40),
a composition circuit (70), which is configured to generate a graphical user interface for applications on the touch-sensitive input unit (30) or a separate display, wherein the touch control unit (80) is configured to communicate with the applications and/or the composition circuit (70) and to effect switching between an activated protection session (34) and a deactivated protection session (31) in the touch-sensitive input unit (30), wherein a respective application is configured to send a query to the touch control unit (80) as an activation message (81) in order to activate the security session (34),
**characterized in that**
the touch control unit (80) is configured to decide whether the protection session (34) for the respective application will be activated, wherein the touch control unit (80) is configured to activate the protection session (34) if a message from the composition circuit (70) confirms that the graphical user interface for the respective application is being displayed in the foreground on the touch-sensitive input unit (30) or the separate display and that the touch control unit (80) has received the activation message (81) from the respective application, wherein a processor arrangement is configured to perform a method according to one of the preceding claims.

## Revendications

1. Procédé permettant de faire fonctionner au moins une unité d'entrée tactile (30) d'un dispositif de commande (20) pour un véhicule automobile (10), dans lequel l'unité d'entrée tactile (30) commande des applications sur un système informatique (60) du véhicule automobile (10) au moyen d'une entrée tactile (31) qui est saisie par un utilisateur (32) sur l'unité d'entrée tactile (30), dans lequel dans le système informatique (40) un circuit de composition (70) affiche une interface utilisateur graphique respective des applications sur l'unité d'entrée tactile (30) ou un affichage séparé de celle-ci, et une unité de commande tactile (80) communique avec les applications et/ou le circuit de composition (70) et provoque un changement entre une session de protection activée (34) et une session de protection désactivée (34) de l'entrée tactile (31) dans l'unité d'entrée tactile (30), dans lequel une application respective envoie en tant que message d'activation (81) une demande à l'unité de commande tactile (80) pour activer la session de protection (34),
**caractérisé en ce que** l'unité de commande tactile (80) décide si la session de protection (34) est activée pour l'application respective, la session de protection (34) étant activée si un message du circuit de composition (70) confirme que l'interface utilisateur graphique de l'application respective est affichée au premier plan sur l'unité d'entrée tactile (30) ou sur l'affichage séparé, et que l'unité de commande tactile (80) a reçu le message d'activation (81) provenant de l'application respective.

2. Procédé selon l'une quelconque des revendications précédentes, dans lequel l'application respective est affichée entièrement ou partiellement au premier plan sur l'unité d'entrée tactile (30).

3. Procédé selon l'une quelconque des revendications précédentes, dans lequel si l'application respective envoie le message d'activation (81) à l'unité de commande tactile (80), la session de protection (34) est activée et un procédé d'autorisation prédéterminé, en particulier un jeton d'accès, est attribué à l'application respective (50) pour l'authentification, et le retour à la session de protection désactivée est déclenché par l'application respective et/ou par une autre application si celle-ci envoie un message de désactivation en tant que demande pour désactiver la session de protection (34) et est autorisée selon le procédé d'autorisation, en particulier en produisant le jeton d'accès.

4. Procédé selon l'une quelconque des revendications précédentes, dans lequel pendant la session de protection (34) active pour une application, l'unité de commande tactile (80) vérifie un état d'exécution de l'application respective, en particulier en vérifiant une présence d'une confirmation cyclique de l'application respective, et la session de protection active (34) est déconnectée lorsque l'état d'exécution de l'application respective satisfait à un critère de déconnexion prédéterminé, en particulier en l'absence de confirmation cyclique.

5. Procédé selon l'une quelconque des revendications précédentes, dans lequel lorsqu'une autre application prédéterminée pour laquelle il existe une interdiction de protection et/ou l'une des autres applications pour laquelle il n'existe aucune demande de session de protection (34) est/sont affichée(s) par le circuit de composition (70) au premier plan sur l'unité d'entrée tactile (30), la session de protection active (34) de l'entrée tactile (31) pour l'application respective est déconnectée par l'unité de commande tactile (80).

6. Procédé selon l'une quelconque des revendications précédentes, dans lequel il est signalé à l'unité de commande tactile (80) de l'application respective et/ou à un utilisateur de l'application respective que la session de protection (34) est désactivée lorsque la session de protection active est déconnectée, et dans lequel pour la signalisation un message (71) est envoyé à l'application respective et/ou un message d'alarme est émis à l'intention de l'utilisateur sur l'unité d'entrée tactile (30) ou l'affichage et/ou une sortie audio acoustique est émise.

7. Procédé selon l'une quelconque des revendications précédentes, dans lequel les applications sont divisées en groupes de fonctions (50, 60), en particulier en machines virtuelles, et pour un groupe de fonctions (50) respectif, une couche commune est attribuée aux applications qui envoient respectivement le message d'activation (81) à l'unité de commande tactile (80), et dans lequel la couche commune est considérée comme une application individuelle par rapport à l'activation et/ou la désactivation de la session de protection (34).

8. Procédé selon la revendication 7, dans lequel un compteur est prévu dans l'unité de commande tactile (80) pour compter un nombre instantané des messages d'activation (83) des applications appartenant à la couche respective, et dans lequel le compteur décrit un nombre positif et/ou un incrément ou un décrément du nombre des messages d'activation (83), et dans lequel la session de protection (34) est activée tant que la couche respective est affichée au premier plan et le nombre instantané des messages d'activation (83) est supérieur à 0.

9. Procédé selon les revendications 7 et 8, dans lequel si le circuit de composition (70) affiche une application d'un autre groupe de fonctions (60) sur l'unité d'entrée tactile (30), la session de protection active (34) de la couche respective est déconnectée et le compteur est remis à 0.

10. Procédé selon l'une quelconque des revendications précédentes, dans lequel dans la session de protection (34), la protection de l'entrée tactile (31) dans l'unité d'entrée (30) est effectuée au moyen d'un algorithme de cryptage et/ou de signature.

11. Procédé selon l'une quelconque des revendications précédentes, dans lequel l'unité d'entrée (30) comprend plusieurs affichages et dans le cas où une application avec une session de protection active (34) est déplacée d'un premier à un deuxième des affichages, la session de protection pour le premier affichage est désactivée et est activée pour le deuxième affichage.

12. Procédé selon l'une quelconque des revendications précédentes, dans lequel un appareil de commande prédéterminé qui est couplé à l'unité d'entrée (30) est autorisé à mettre fin à une session de protection (34).

13. Dispositif de commande (20), comprenant au moins une unité d'entrée tactile (30), une unité de commande tactile (80), un système informatique (40) et un circuit de composition (70), dans lequel l'unité de commande tactile (80) présente une entrée de données pour recevoir des messages et une sortie de données pour commander une unité d'entrée tactile (30), dans lequel l'unité d'entrée tactile (30) est conçue pour commander des applications sur le système informatique (60) au moyen d'une entrée tactile (31) qui est saisie par un utilisateur (32) sur l'unité d'entrée tactile (30), dans lequel dans le système informatique (40) un circuit de composition (70) est conçu pour afficher une interface utilisateur graphique respective des applications sur l'unité d'entrée tactile (30) ou un affichage séparé de celle-ci, et l'unité de commande tactile (80) est conçue pour communiquer avec les applications et/ou le circuit de composition (70) et pour provoquer un changement entre une session de protection activée (34) et une session de protection désactivée (34) de l'entrée tactile (31) dans l'unité d'entrée tactile (30), dans lequel une application respective est conçue pour activer la session de protection (34) en tant que message d'activation (81) pour envoyer une demande à l'unité de commande tactile (80),
**caractérisé en ce que** l'unité de commande tactile (80) est conçue pour décider si la session de protection (34) pour l'application respective est activée, dans lequel l'unité de commande tactile (80) est conçue pour activer la session de protection (34) si un message du circuit de composition (70) confirme que l'interface utilisateur graphique de l'application respective est affichée au premier plan sur l'unité d'entrée tactile (30) ou l'affichage séparé, et l'unité de commande tactile (80) a reçu le message d'activation (81) provenant de l'application respective, dans lequel un dispositif de processeur est conçu pour exécuter un procédé selon l'une quelconque des revendications précédentes.

14. Véhicule automobile (10), comprenant un dispositif de commande (20) pour un procédé selon l'une quelconque des revendications 1 à 12, dans lequel le dispositif de commande (20) comprend :
au moins une unité d'entrée tactile (30) qui est conçue pour saisir une entrée tactile (31) et/ou pour afficher l'entrée tactile (31),
une unité de commande tactile (80) qui est conçue pour recevoir des messages et/ou pour commander ladite au moins une unité d'entrée tactile (30),
un système informatique (40),
un circuit de composition (70) qui est conçu pour générer une interface utilisateur graphique des applications sur l'unité d'entrée tactile (30) ou un affichage séparé, l'unité de commande tactile (80) étant conçue pour communiquer avec les applications et/ou le circuit de composition (70) et pour provoquer un changement entre une session de protection activée (34) et une session de protection désactivée (34) de l'entrée tactile (31) dans l'unité d'entrée tactile (30), dans lequel une application respective est conçue pour envoyer en tant que message d'activation (81) une demande à l'unité de commande tactile (80) pour activer la session de protection (34),
**caractérisé en ce que** l'unité de commande tactile (80) est conçue pour décider si la session de protection (34) pour l'application respective est activée, dans lequel l'unité de commande tactile (80) est conçue pour activer la session de protection (34) lorsqu'un message du circuit de composition (70) confirme que l'interface utilisateur graphique de l'application respective est affichée au premier plan sur l'unité d'entrée tactile (30) ou l'affichage séparé, et que l'unité de commande tactile (80) a reçu le message d'activation (81) provenant de l'application respective, dans lequel un dispositif de processeur est conçu pour exécuter un procédé selon l'une quelconque des revendications précédentes.
